# EUROPEAN PATENT APPLICATION

(11) **EP 4 254 643 A1**
(43) Date of publication of application: **04.10.2023**
(21) Application number: 22742832.3
(22) Date of filing: 19.01.2022
(51) Int. Cl.: H01M 50/538, H01M 10/04, B23K 35/24, B23K 26/21, B23K 101/38

(54) **SUB-CELL, MANUFACTURING METHOD THEREFOR, AND CYLINDRICAL SECONDARY BATTERY, BATTERY PACK, AND AUTOMOBILE COMPRISING SUB-CELL**

(30) Priority: 19.01.2021 KR 20210007282
(71) Applicant: LG Energy Solution, Ltd., Seoul 07335 (KR)
(72) Inventor: CHOI, Su-Ji, Daejeon 34122 (KR); HWANGBO, Kwang-Su, Daejeon 34122 (KR); KIM, Do-Gyun, Daejeon 34122 (KR); MIN, Geon-Woo, Daejeon 34122 (KR); JO, Min-Ki, Daejeon 34122 (KR)
(74) Representative: Goddar, Heinz J.
(86) International application number: PCT/KR2022/001004
(87) International publication number: WO 2022/158856

(57) **Abstract**

A sub cell according to an embodiment of the present disclosure includes a jelly-roll type electrode assembly including an electrode tab, a current collector plate joined to one side of the electrode assembly and electrically connected to the electrode tab, and a solder interposed between the electrode tab and the current collector plate to join the electrode tab and the current collector plate, the solder having a lower melting point than the electrode tab and the current collector plate.

## Description

### TECHNICAL FIELD

The present disclosure relates to a sub cell and its manufacturing method, and a battery pack and a vehicle comprising the sub cell. More particularly, the present disclosure relates to a sub cell having a structure capable of preventing welding spatter by performing welding for electrical connection between a non-coated region of an electrode assembly and a current collector plate at a lower temperature than the melting point of the base material. Additionally, the present disclosure relates to a method for manufacturing a sub cell, a cylindrical secondary battery comprising the sub cell and a battery pack and a vehicle comprising the cylindrical secondary battery.

The present application claims priority to Korean Patent Application No. 10-2021-0007282 filed on January 19, 2021 in the Republic of Korea, the disclosures of which are incorporated herein by reference.

### BACKGROUND ART

In a cylindrical secondary battery, a non-coated region (an electrode tab) provided in a jelly-roll type electrode assembly received in a battery can is joined with a current collector plate by welding. The welding used to manufacture a sub cell including the electrode assembly and the current collector plate may be laser welding.

To join the current collector plate and the non-coated region through laser welding, it is necessary to perform the welding at a higher temperature than the melting point of the base material of the current collector plate placed on the electrode assembly, so that a part of the current collector plate melts and is joined with the non-coated region.

The current collector plate may be, for example, an aluminum plate, and a copper plate may be used. However, in the case of a welding method which directly melts the common current collector plate made of aluminum or copper and joins it with the non-coated region, welding is performed by laser irradiation of very high energy due to high melting point of aluminum or copper.

The energy of laser irradiation for welding is very high, and when welding is performed above the melting point of the current collector plate to which laser irradiation is targeted, welding spatter occurs. The welding spatter remains as a metal impurity in the electrode assembly, causing a small short by an unnecessary electrical connection between the electrodes. The small short is a factor that may adversely affect the performance and safety of the cylindrical secondary battery.

Accordingly, there is a need for a sub cell having a structure for performing laser welding for the joining between the electrode assembly and the current collector plate of the cylindrical secondary battery without welding spatter and a method for manufacturing the sub cell.

### DISCLOSURE

### Technical Problem

The present disclosure is designed to solve the above-described problem, and therefore an object of the present disclosure is to prevent welding spatter when performing laser welding for the joining between an electrode assembly and a current collector plate of a cylindrical secondary battery.

In another aspect, the present disclosure is directed to securing a sufficient area for welding between electrical connection components such as a bus bar for manufacturing a battery pack and electrode terminals of the cylindrical secondary batteries by allowing a wide surface of a closed portion of the battery can to be used as an electrode terminal in the case of electrically connecting a plurality of cylindrical secondary batteries in one direction.

However, the technical problem of the present disclosure is not limited to the above-described problem, and other problems not mentioned herein will be clearly understood by those skilled in the art from the following description.

### Technical Solution

To solve the above-described problem, a sub cell according to an embodiment of the present disclosure includes a jelly-roll type electrode assembly including an electrode tab, a current collector plate joined to one side of the electrode assembly and electrically connected to the electrode tab, and a solder interposed between the electrode tab and the current collector plate to join the electrode tab and the current collector plate, the solder having a lower melting point than the electrode tab and the current collector plate.

The solder may penetrate in between adjacent electrode tabs by capillary action when the solder melts by the welding.

A penetration distance of the solder may be shorter than an extension length of the electrode tab.

An end of the electrode tab in a lengthwise direction may be bent in a direction parallel to the current collector plate, and the solder may be interposed between a plane formed by the bend of the electrode tab and the current collector plate.

The penetration distance of the solder between adjacent electrode tabs may gradually decrease as it goes from an outer peripheral surface of the electrode assembly to a winding center.

The current collector plate may include a plurality of sub plates which extends radially from a center and is spaced apart from each other.

The sub plate may gradually decrease in width as it goes from an outer peripheral surface of the electrode assembly to a winding center.

The solder may gradually decrease in width as it goes from the outer peripheral surface of the electrode assembly to the winding center.

The electrode assembly may have a structure in which a first electrode, a second electrode, and a separator interposed therebetween are wound in one direction, and the first electrode and the second electrode may include a first non-coated region and a second non-coated region, respectively, which are provided at a long side end thereof, are not coated with an active material and are exposed to the outside of the separator.

At least one of the first non-coated region and the second non-coated region may function as the electrode tab.

The non-coated region of at least one of the first non-coated region and the second non-coated region may include a plurality of segments divided along a winding direction of the electrode assembly, and the plurality of segments may be bent along a radial direction of the electrode assembly.

The plurality of bent segments may be overlapped in multiple layers along the radial direction.

The electrode assembly may have a welding target area in which the number of overlaps of the segments provided in the non-coated region is maintained constant along the radial direction of the electrode assembly.

The current collector plate may be joined to the non-coated region inside the welding target area.

A method for manufacturing a sub cell according to an embodiment of the present disclosure includes (S1) preparing a jelly-roll type electrode assembly, (S2) preparing a current collector plate having a solder on one surface, (S3) seating the current collector plate on the electrode assembly, and (S4) performing welding to join an electrode tab of the electrode assembly and the current collector plate together by melting of the solder, wherein the welding is performed at a lower temperature than a melting point of the electrode tab and a melting point of the current collector plate.

The step (S4) may include melting the solder to cause the solder to penetrate in between adjacent electrode tabs by capillary action.

The step (S2) may include adjusting a thickness of the solder formed on one surface of the current collector plate so that a penetration distance of the solder is shorter than an extension length of the electrode tab.

The step (S2) may include adjusting the thickness of the solder formed on one surface of the current collector plate so that the penetration distance of the solder between adjacent electrode tabs gradually decreases as it goes from an outer peripheral surface of the electrode assembly to a winding center.

A cylindrical secondary battery according to an embodiment of the present disclosure includes the sub cell according to an embodiment of the present disclosure; and a battery can configured to accommodate the sub cell through an open portion provided at one side thereof and electrically connected to the electrode assembly.

The cylindrical secondary battery may further comprise a terminal electrically connected to the electrode assembly, having a polarity opposite to the battery can and insulated from the battery can.

The terminal may be exposed to the outside through a closed portion provided at a side opposite to the open portion of the battery can.

The cylindrical secondary battery may further comprise a cap plate configured to seal the open portion.

The cap plate may have no polarity.

Meanwhile, a battery pack according to an embodiment of the present disclosure includes a plurality of cylindrical secondary batteries according to an embodiment of the present disclosure, and a pack housing to accommodate the plurality of cylindrical secondary batteries.

In this case, each of the plurality of cylindrical secondary batteries may include a terminal that is electrically connected to the electrode assembly, has a polarity opposite to the battery can and is insulated from the battery can.

An outer surface of a closed portion of the battery can of each of the plurality of cylindrical secondary batteries and the terminal of the battery can may be disposed to face the same direction.

The battery pack may further comprise a plurality of bus bars configured to connect the plurality of cylindrical secondary batteries in series and in parallel.

The plurality of bus bars may be disposed at an upper portion of the plurality of cylindrical secondary batteries. In this case, each of the bus bars may include a body portion configured to extend between terminals of adjacent cylindrical secondary batteries; a plurality of first bus bar terminals configured to extend in one side direction of the body portion and electrically coupled to a terminal of a cylindrical secondary battery located in the one side direction; and a plurality of second bus bar terminals configured to extend in the other side direction of the body portion and electrically coupled to an outer surface of the closed portion of a cylindrical secondary battery located in the other side direction.

A vehicle according to an embodiment of the present disclosure comprising the battery pack according to an embodiment of the present disclosure.

### Advantageous Effects

According to an aspect of the present disclosure, it is possible to prevent welding spatter when performing laser welding for the joining between an electrode assembly and a current collector plate of a cylindrical secondary battery, thereby preventing the performance degradation of the cylindrical secondary battery and improving safety of the cylindrical secondary battery while in use.

According to another aspect of the present disclosure, electrical wiring for serial and/or parallel connection of the cylindrical secondary batteries may be performed at one side of the cylindrical secondary batteries.

According to still another aspect of the present disclosure, in the case of electrically connecting a plurality of cylindrical secondary batteries in one direction, the wide surface of the closed portion of the battery can may be used as an electrode terminal, and thus it is possible to secure a sufficient area for welding between electrical connection components such as a bus bar for manufacturing a battery pack and electrode terminals of the cylindrical secondary batteries.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 to 3 are diagrams showing a sub cell according to an embodiment of the present disclosure.
FIG. 4 is diagram showing a current collector plate for manufacturing a sub cell according to an embodiment of the present disclosure and a solder formed on one surface thereof.
FIG. 5 is a diagram showing a sub cell according to another embodiment of the present disclosure.
FIG. 6 is diagram showing a current collector plate for manufacturing a sub cell according to another embodiment of the present disclosure and a solder formed on one surface thereof.
FIG. 7 is a diagram showing a sub cell according to still another embodiment of the present disclosure.
FIG. 8 is diagram showing a current collector plate for manufacturing a sub cell according to still another embodiment of the present disclosure and a solder formed on one surface thereof.
FIG. 9 is a plan view exemplarily showing an electrode structure according to a preferred embodiment of the present disclosure.
FIG. 10 is a cross-sectional view, taken along a lengthwise direction (Y), showing an electrode assembly in which the non-coated region segment structure of a first electrode according to an embodiment of the present disclosure is also applied to a second electrode.
FIG. 11 is a cross-sectional view, taken along the lengthwise direction (Y), showing an electrode assembly in which the non-coated region is bent according to an embodiment of the present disclosure.
FIG. 12 is a perspective view showing the electrode assembly in which the non-coated region is bent according to an embodiment of the present disclosure.
FIG. 13 is a diagram showing an appearance of a cylindrical secondary battery according to an embodiment of the present disclosure.
FIG. 14 is a cross-sectional view showing an inner configuration of the cylindrical secondary battery according to an embodiment of the present disclosure.
FIG. 15 is a top plan view showing that the plurality of cylindrical secondary batteries according to an embodiment of the present disclosure are connected in series and in parallel using bus bars.
FIG. 16 is a schematic diagram showing a battery pack according to an embodiment of the present disclosure.
FIG. 17 is a conceptual diagram showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

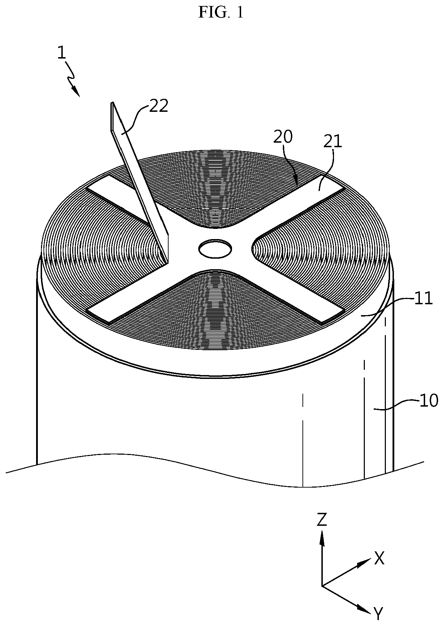

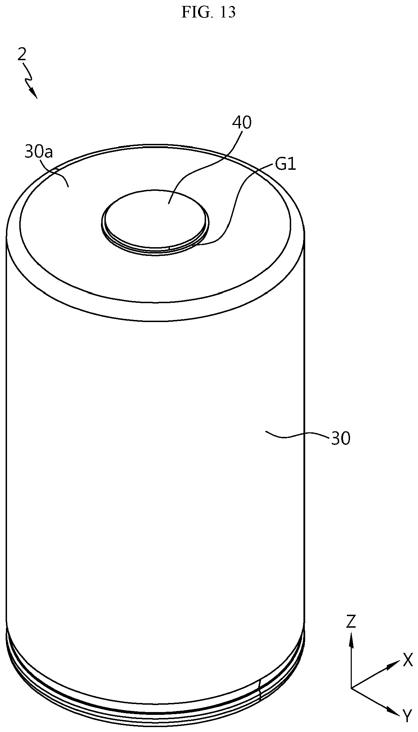

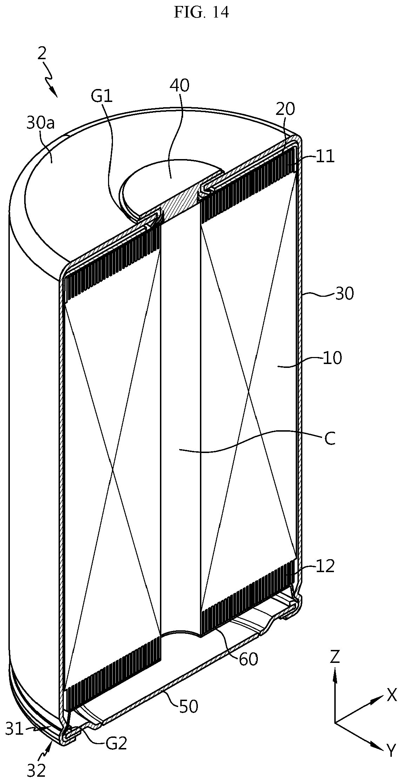

Referring to FIGS. 1 to 3 along with FIGS. 13 and 14, a sub cell 1 according to an embodiment of the present disclosure includes an electrode assembly 10, a current collector plate (a first current collector plate) 20, and a solder S for joining the electrode assembly 10 and the current collector plate 20. The sub cell 1 may further include a current collector plate (a second current collector plate) 60, in addition to the current collector plate (the first current collector plate) 20.

The electrode assembly 10 includes a first electrode having a first polarity, a second electrode having a second polarity, and a separator interposed between the first electrode and the second electrode. The electrode assembly 10 may be a jelly-roll type electrode assembly. That is, the electrode assembly 10 may be manufactured by winding a stack formed by stacking the first electrode, the separator and the second electrode at least once in a sequential order with respect to the winding center C. In this case, the separator may be provided on the outer peripheral surface of the electrode assembly 10 for insulation from a battery can 30 (see FIGS. 13 and 14). The first electrode is a positive or negative electrode, and the second electrode corresponds to an electrode having the opposite polarity to the first electrode.

The first electrode includes a first electrode current collector and a first electrode active material coated on one or two surfaces of the first electrode current collector. A non-coated region in which the first electrode active material is not coated exists at one end of the first electrode current collector in the widthwise direction (a direction parallel to the Z axis). The non-coated region acts as a first electrode tab 11. The first electrode tab 11 may be a positive electrode tab or a negative electrode tab.

The second electrode includes a second electrode current collector and a second electrode active material coated on one or two surfaces of the second electrode current collector. A non-coated region in which the second electrode active material is not coated exists at the other end of the second electrode current collector in the widthwise direction (the direction parallel to the Z axis). The non-coated region acts as a second electrode tab 12. The second electrode tab 12 has a polarity opposite to the first electrode tab 11.

The first electrode tab 11 and the second electrode tab 11 may extend in the opposite direction. In the drawings of the present disclosure, only the case in which the second electrode tab 12 is provided to both the first current collector plate 20 and the second current collector plate 60 is illustrated, but the present disclosure is not limited thereto. That is, the second electrode tab 12 may not be provided to any one of the first current collector plate 20 and the second current collector plate 60. In addition, in FIGS. 1 to 3 and 7, only the joined structure of the first current collector plate 20 and the first electrode tab 11 is illustrated, but this is only an example for convenience of explanation, and the joined structure illustrated in the drawings may be applied to the joining of the first current collector plate 20 and the first electrode tab 11 and/or the joining of the second current collector plate 60 and the second electrode tab 12.

Referring to FIGS. 1 and 14, the current collector plate 20 is joined to one side of the electrode assembly 10 in the height direction (direction parallel to the Z axis). The current collector plate 20 is made of a metal having conductive properties, and is electrically connected to the first electrode tab 11. The current collector plate 20 may include a tab coupling portion joined to the first electrode tab 11. In addition, the current collector plate 20 may include a terminal coupling portion joined to a component capable of functioning as an electrode terminal in the cylindrical secondary battery.

The current collector plate (the first current collector plate) 20 may include a plurality of sub plates 20 that extends, for example, radially from the center. In this case, the sub plates 20 may function as a tab coupling portion. The plurality of sub plates 20 may be arranged to be spaced apart from each other. When the current collector plate 20 is joined to the top or the bottom of the electrode assembly 10, the current collector plate 20 covers only parts of the upper surface or the lower surface of the electrode assembly 10 to improve wettability when injecting an electrolyte, and easily force gas out of the electrode assembly 10 when the gas is generated in the electrode assembly 10.

The current collector plate 20 may further include a lead plate 22. The lead plate 22 may function as a terminal coupling portion. Of course, alternatively, the current collector plate 20 may not include the lead plate 22, and in this case, for example, the central portion of the current collector plate 20 may function as a terminal coupling portion.

The current collector plate (the second current collector plate) 60 is joined to the other side of the electrode assembly 10 in the height direction (parallel to the Z-axis). The current collector plate 60 is made of a conductive metal material and is electrically connected to the second electrode tab 12. The current collector plate (the second current collector plate) 60 may include a tab coupling portion joined to the second electrode tab 12. In addition, the current collector plate 20 may include a terminal coupling portion joined to a component capable of functioning as an electrode terminal in the cylindrical secondary battery.

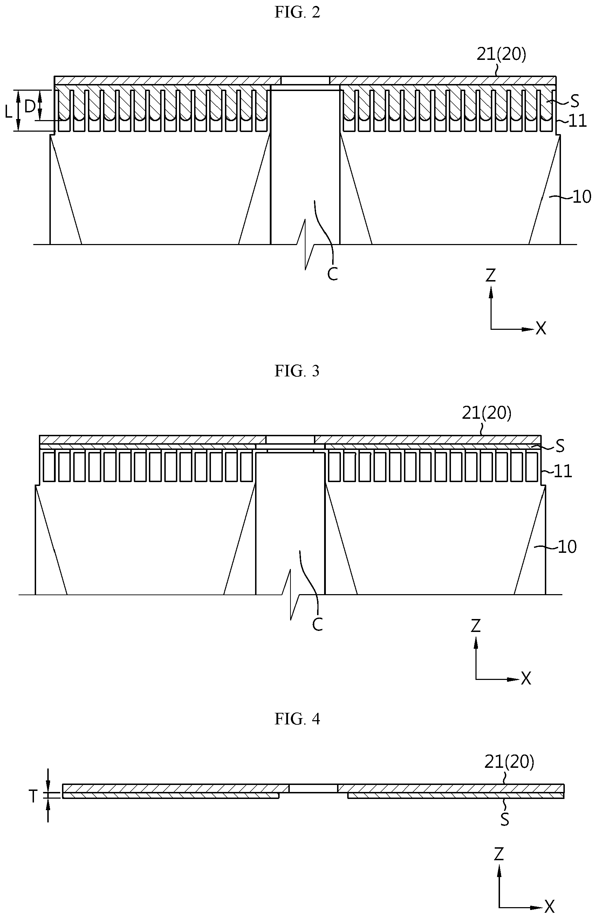

Referring to FIGS. 2 and 3, the solder S is interposed between the electrode tab 11 and the current collector plate 20 to join the electrode tab 11 and the current collector plate 20. The solder S is made of a metal having lower melting point than the electrode tab 11 and the current collector plate 20. This is to lower the welding temperature by reducing the melting point of the solder S below the melting point of the base material, thereby preventing welding spatter during welding.

The solder S may be provided in a soldering type or a brazing type. Here, the soldering type refers to providing the solder S by coating a solder paste having low melting point on one surface of the current collector plate 20. Additionally, the brazing type refers to integrally providing the current collector plate 20 and the solder S by cladding an alloy layer having low melting point on one surface of the current collector plate 20.

In the case of the soldering type, for example, a three component alloy including Sn, Ag and Bi may be used for the solder S. In this case, the solder S may have the melting point of approximately 290°. In the case of the brazing type, for example, Al 40 based (lowering the melting point by adding silicon to Al) alloy may be used for the solder S. In this case, the solder S may have the melting point of approximately 510°.

The electrode tab 11 corresponds to an area of the electrode current collector formed of a foil where the electrode active material is not coated. Accordingly, the electrode tab 11 may be made of copper or aluminum. The current collector plate 20 may be an aluminum or copper plate. In the case of the soldering type and brazing type, the alloy that forms the solder S has a sufficiently lower melting point than a metal commonly used in the electrode tab 11 and the current collector plate 20, such as aluminum and copper.

Referring to FIG. 2, a plurality of electrode tabs 11 spaced apart from each other extend to one side of the electrode assembly 10 side by side, and the solder S penetrates in between adjacent electrode tabs 11 by the capillary action when it melts by welding. Although the drawings of the present disclosure show a sufficiently wide distance between adjacent electrode tabs 11 to show the interposed solder S clearly, the jelly-roll type electrode assembly actually has a very small gap between adjacent electrodes and adjacent electrode tabs 11. Accordingly, the solder S penetrates in between adjacent electrode tabs 11 by the capillary action when it temporarily melts by welding.

When the penetration distance D of the solder S is longer than the extension length L of the electrode tab 11, the solder S contacts the electrode active material formed on the electrode current collector. When this phenomenon occurs, the electrode active material may be damaged, and a short circuit may occur due to an electrical connection between adjacent electrodes of opposite polarity. Accordingly, the penetration distance D of the solder S between adjacent electrode tabs 11 is shorter than the extension length L of the electrode tab 11.

Referring to FIG. 4, the thickness T of the solder S formed on the current collector plate 20 is adjusted so that the penetration distance D of the solder S between adjacent electrode tabs 11 by welding is shorter than the extension length L of the electrode tab 11.

Referring to FIG. 3, an end of the electrode tab 11 in the lengthwise direction is bent in a direction parallel to the current collector plate 20 (a direction parallel to the X axis). In this case, the solder S is interposed between a plane formed by the bend of the electrode tab 11 and the current collector plate. When the electrode tab 11 has a bent shape, the space occupied by the electrode tab 11 reduces, resulting in the improved energy density.

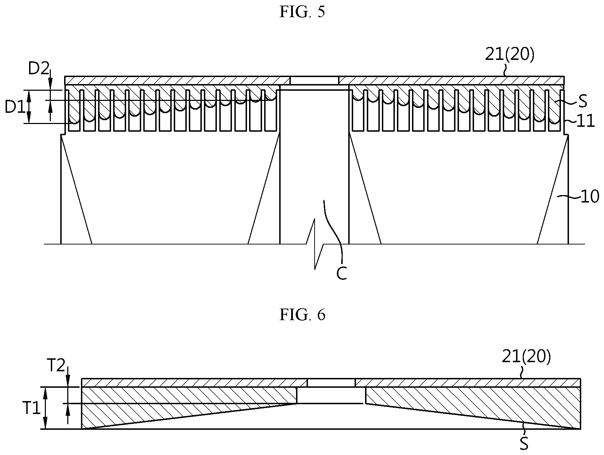

The sub cell 1 according to another embodiment of the present disclosure shown in FIG. 5 has substantially the same elements as the embodiment shown in FIG. 2, only different in the shape of penetration of the solder S. Accordingly, in describing the sub cell 1 according to another embodiment of the present disclosure, overlapping descriptions with the previous embodiment are omitted, and the shape of penetration of the solder S will be described in detail.

Referring to FIG. 5, the solder S penetrates in between adjacent electrode tabs 11 by the capillary action. In this instance, the penetration distance D1, D2 of the solder S gradually becomes shorter as it goes from the outer peripheral surface of the electrode assembly 10 to the winding center C. That is, the distance D1 is longer than the distance D2, and the penetration distance of the solder S decreases approximately uniformly from D1 to D2. As the penetration distance of the solder S differs, it is possible to minimize the difference in electrical resistance and heat generation over the entire joint area of the electrode tab 11 and the solder S.

Referring to FIG. 1, when the jelly-roll type electrode assembly 10 is viewed from the top, the area of the electrode wound in the shape of a circle increases as it is farther from the winding center C. The area of the electrode in contact with the solder S area far away from the winding center C is larger than the area of the electrode in contact with the solder S area close to the winding center C. Accordingly, it is advantageous that the solder S area far away from the winding center C has a larger contact area with the electrode than the solder S area close to the winding center C.

Referring to FIGS. 5 and 6, the thickness T1, T2 of the solder S formed on the current collector plate 20 is adjusted so that the penetration distance D1, D2 of the solder S between the electrode tab 11 by welding gradually decreases as it goes from the outer peripheral surface of the electrode assembly 10 to the winding center C. That is, before the welding, the thickness T1, T2 of the solder S formed on one surface of the current collector plate 20 gradually decreases as it goes from the outer side of the current collector plate 20 to the center. That is, the thickness T1 is larger than the thickness T2, and the thickness of the solder S decreases approximately uniformly from T1 to T2.

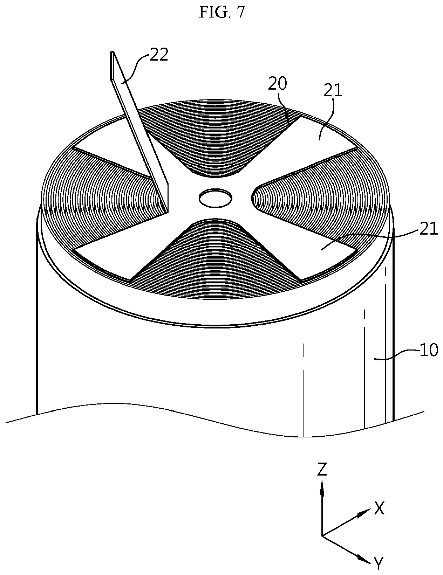

The sub cell 1 according to still another embodiment of the present disclosure shown in FIG. 7 has substantially the same elements as the previous embodiments, only different in the shape of the current collector plate 20. Accordingly, in describing the sub cell 1 according to still another embodiment of the present disclosure, overlapping descriptions with the previous embodiments are omitted, and the shape of the current collector plate 20 and the consequential shape of the solder S will be described in detail.

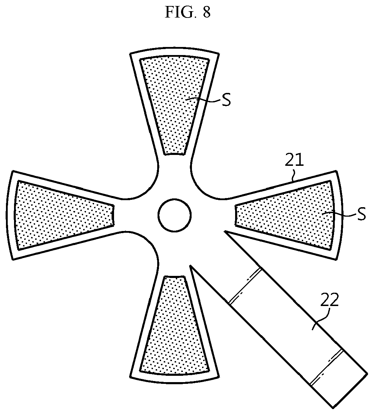

Referring to FIGS. 7 and 8, the sub plate 21 of the current collector plate 20 gradually decreases in width as it goes from the outer peripheral surface of the electrode assembly 10 to the winding center. Accordingly, the solder S formed on one surface of the sub plate 21 also gradually decreases in width as it goes from the outer peripheral surface of the electrode assembly 10 to the winding center. This structure is to obtain the same advantage as the advantage of the structure shown in FIG. 5. Additionally, the structure of the sub cell 1 shown in FIGS. 7 and 8 combined with the structure of the sub cell 1 shown in FIGS. 5 and 6 may further reduce the difference in electrical resistance and heat generation over the entire joint area of the electrode tab 11 and the solder S.

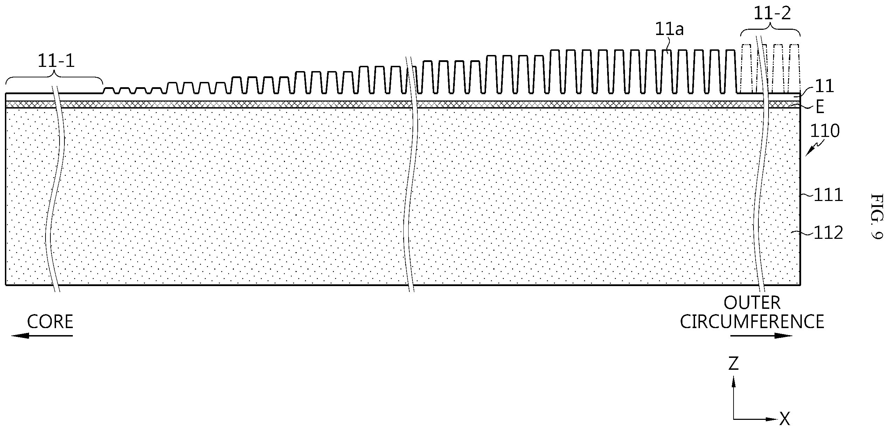

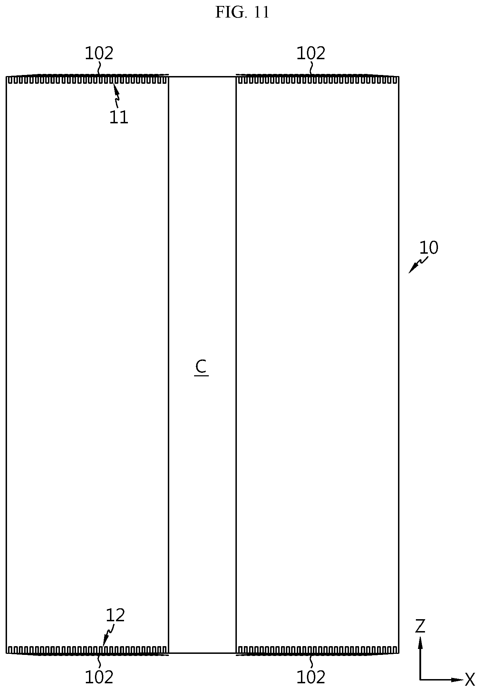

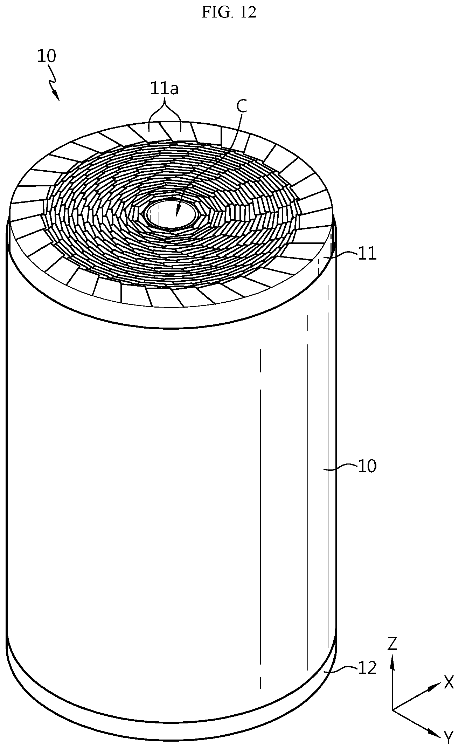

Referring to FIGS. 9 to 12, a specific structure of the electrode assembly 10 according to an embodiment of the present disclosure is shown. In the following description, the first electrode among the first and second electrodes will be described as an example, but the structure of the first electrode may be equally applied to the second electrode.

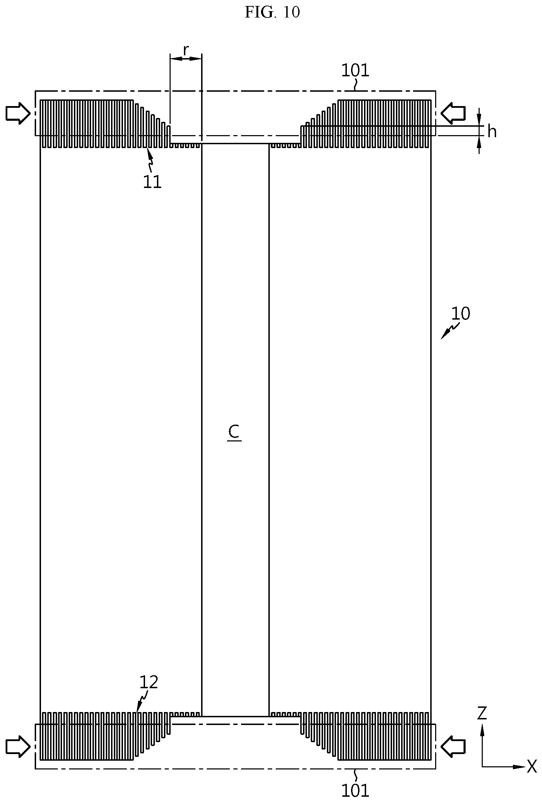

Referring to FIGS. 9 and 10, the first electrode 110 includes a first electrode current collector 111 having an approximately sheet shape made of a conductive foil, a first active material layer 112 formed on at least one surface of the first electrode current collector 111, a first active material layer 112 formed on at least one surface of the first electrode current collector 111, and a first non-coated region (a first electrode tab) 11 formed by not coating an active material on a long side end of the first electrode current collector 111.

Preferably, the first non-coated region 11 may include a plurality of segments 11a formed by notching. The plurality of segments 11a may form a plurality of groups, and the segments 11a belonging to each group may have the same height (length in the Z-axis direction) and/or width (length in the X-axis direction) and/or the separation pitch. The number of segments 11a belonging to each group may be increased or decreased than illustrated. The segment 11a has a geometric shape in which at least one straight line and/or at least one curve are combined. Preferably, the segment 11a may have a trapezoidal shape, and may be deformed into a quadrangle, a parallelogram, a semicircle, or a semi-ellipse.

Preferably, the height of the segments 11a may be increased stepwise along one direction parallel to the winding direction of the electrode assembly 10, for example from the core toward the outer circumference. In addition, the core-side non-coated region 11-1 adjacent to the core of the electrode assembly 10 may include no segment 11a, and the height of the core-side non-coated region 11-1 may be lower than that of the non-coated region of the other region. Also, the outer circumferential non-coated region 11-2 adjacent to the outer circumference of the electrode assembly 10 may include no segment 11a, and the height of the outer circumferential non-coated region 11-2 may be lower than that of the other non-coated region.

Optionally, the first electrode 110 may include an insulation coating layer E that covers a boundary between the active material layer 112 and the first non-coated region 11. The insulation coating layer E includes an insulating polymer resin, and may optionally further include an inorganic filler. The insulation coating layer E may function to prevent the end of the active material layer 112 from contacting the active material layer having an opposite polarity that faces through the separator, and to structurally support the bending of segment 11a. To this end, when the first electrode 110 is wound to form the electrode assembly 10, it is preferable that at least a portion of the insulation coating layer E is exposed to the outside from the separator.

The height-varying patterns of the non-coated regions 11, 12 are schematically shown. That is, the height of the non-coated regions 11, 12 may vary irregularly depending on the location where the cross-section is cut. For example, if a side portion of the trapezoidal segment 11a is cut, the height of the non-coated region in the cross-section is lower than the height of the segment 11a. Therefore, it should be understood that the heights of the non-coated regions 11, 12 shown in the drawings showing the cross-section of the electrode assembly 10 correspond to the average of the heights of the non-coated regions included in the respective winding turns.

Referring to FIGS. 9 to 12, the non-coated regions 11, 12 may be bent along the radial direction of the electrode assembly 10, for example from the outer circumference toward the core. In the non-coated regions 11, 12, the region where bending occurs is indicated by a dotted line box in FIG. 10. When the non-coated regions 11, 12 are bent, segments adjacent to each other in the radial direction are overlapped in multiple layers, so that bent surfaces 102 are formed on the upper and lower portions of the electrode assembly 10. At this time, the core-side non-coated region 11-1 (FIG. 9) is not bent due to its low height, and the height h of the segment 11a, which is bent at the innermost side, is less than or equal to the radial length r of the winding area formed by the core-side non-coated region 11-1 with no segment structure. Accordingly, the hole formed in the core of the electrode assembly 10, namely at the winding center C, is not closed. If the hole is not closed, there is no difficulty in the electrolyte injection process, and the electrolyte injection efficiency may be improved. In addition, by inserting a welding tool through the hole, it is possible to easily weld the terminal 40 and the current collector plate 20 (see FIG. 14).

Meanwhile, referring to FIG. 14 along with FIGS. 9 to 12, as described above, each of the first electrode tab (the first non-coated region) 11 and/or the second electrode tab (the second non-coated region) 12 has segments, and the segment are bent inwardly or outwardly along the radial direction of the electrode assembly 10 to have a multi-layered structure. In this case, the electrode assembly 10 may have a welding target area in which the number of overlapping layers of segments is maintained approximately constant along the radial direction. In this region, the number of overlapping layers is maintained approximately at a maximum. Therefore, it may be advantageous that the welding between the current collector plates 20, 60 and the electrode tabs 11, 12 is performed within this area. In this case, when laser welding is applied as an example, it is possible to prevent a laser beam from penetrating the electrode tabs 11, 12 and damaging the electrode assembly 10 when the output of the laser is increased to improve welding quality. In addition, in this case, it is possible to effectively prevent foreign substances such as welding spatters from being introduced into the electrode assembly 10.

Referring to FIGS. 1 to 8, a method for manufacturing the sub cell 1 of the present disclosure as described above includes (S 1) preparing the electrode assembly 10, (S2) preparing the current collector plate 20, (S3) seating the current collector plate 20 on the electrode assembly 10, and (S4) performing welding. Any one of the step S1 and the step S2 may be performed earlier, and the two steps may be performed at the same time.

The step S 1 includes winding the stack of the electrode and the separator to form the j elly-roll type electrode assembly 10.

The step S2 includes preparing the current collector plate 20 having the solder S on one surface. The step S2 includes coating a solder paste on the current collector plate 20 or cladding an alloy layer on one surface of the current collector plate 20.

The step S2 may further include adjusting the thickness of the solder S formed on one surface of the current collector plate 20 so that the penetration distance of the solder S is shorter than the extension length of the electrode tab 11 when performing the step S4 (see FIGS. 2 and 4). The step S2 may further include adjusting the thickness of the solder S formed on one surface of the current collector plate 2 so that the penetration distance of the solder S between adjacent electrode tabs 11 gradually decreases as it goes from the outer peripheral surface of the electrode assembly 10 to the winding center C (see FIGS. 5 and 6).

The step S4 includes performing welding to join the electrode tab 11 of the electrode assembly 10 and the current collector plate 20 together by the melting of the solder S. The step S4 includes performing welding at lower temperature than the melting point of the current collector plate 20 and the electrode tab 11. The welding may be, for example, laser welding. The step S4 includes causing the solder S to penetrate in between adjacent electrode tabs 11 by the capillary action when it melts (see FIGS. 2 and 5).

Referring to FIGS. 13 and 14, an exemplary configuration of a cylindrical secondary battery 2 according to an embodiment of the present disclosure is illustrated. The cylindrical secondary battery 2 according to the present disclosure includes the sub cell 1 according to an embodiment of the present disclosure and the battery can 30 to accommodate the sub cell 1. In addition, the cylindrical secondary battery 2 may further include a terminal 40 electrically connected to the electrode assembly 10 and/or a cap 40 that closes the opening formed at one side of the battery can 30.

The battery can 30 is a substantially cylindrical container having an open portion at one side thereof, and is made of, for example, a conductive material such as metal. The battery can 30 may have a closed portion positioned opposite to the open portion, and an outer surface 30a of the closed portion may have an approximately flat shape. The battery can 30 accommodates the electrode assembly 10 through the open portion, and also accommodates an electrolyte together. The battery can 30 may include a beading portion 31 and a crimping portion 32 formed adjacent to the open portion. The beading portion 31 is formed by press-fitting the outer peripheral surface of the battery can 30. The beading portion 31 may function as a fixing portion to prevent the electrode assembly 10 accommodated in the battery can 30 from being deviated toward the open portion. The crimping portion 32 is formed at the lower portion of the beading portion 31, when viewed with reference to FIGS. 13 and 14. The crimping portion 32 has a shape extended and bent from the beading portion 31 so as to surround the outer peripheral surface of the cap 50 and a portion of the lower surface of the cap 50. In this case, a sealing gasket G2 may be provided in the region where the crimping portion 32 is formed. The sealing gasket G2 may be interposed between the inner surface of the battery can 30 and the cap 50.

The battery can 30 may be electrically connected to the second electrode tab 12 of the electrode assembly 10. The electrical connection between the battery can 30 and the second electrode tab 12 may be made through the current collector plate (the second current collector plate) 60. In this case, the terminal coupling portion of the current collector plate 60 may be electrically coupled to the sidewall of the battery can 30, for example. However, the present disclosure is not limited thereto, and the second electrode tab 12 may be directly coupled to the battery can 30.

The terminal 40 is electrically connected to the first electrode tab 11. The connection between the terminal 40 and the first electrode tab 11 may be made through the current collector plate (the first current collector plate) 20. The terminal 40 may be joined to the terminal coupling portion of the current collector plate 20, and may be exposed to the outside through approximately the center of the closed portion of the battery can 30. In this case, since the terminal 40 and the battery can 30 have different polarities, an insulating gasket G1 may be interposed between the battery can 30 and the terminal 40 to prevent contact between them and to strengthen the airtightness in the exposed area of the terminal 40.

The cap 50 seals the open portion formed at one side of the battery can 30. If the cylindrical secondary battery 2 of the present disclosure has the shape shown in FIGS. 13 and 14, the cap 50 may have no polarity even if it is made of a conductive metal material. The fact that the cap 50 has no polarity means that the cap 50 is not electrically connected to the electrode assembly 10. If the cap 50 is not electrically connected to the electrode assembly 10 as above, the cap 50 does not function as an electrode terminal. That is, in the present disclosure, the cap 50 is not necessarily electrically connected to the electrode assembly 10 and the battery can 30, and its material does not necessarily have to be a conductive metal.

If the cylindrical secondary battery 2 of the present disclosure has the structure shown in FIGS. 13 and 14, the terminal 40 electrically connected to the first electrode tab 11 to function as a first electrode terminal and the outer surface 30a of the closed portion of the battery can 30 electrically connected to the second electrode tab 12 to function as a second electrode terminal are located in the same direction. According to this structure, it may be easy to electrically connect the cylindrical secondary batteries 2 using a bus bar.

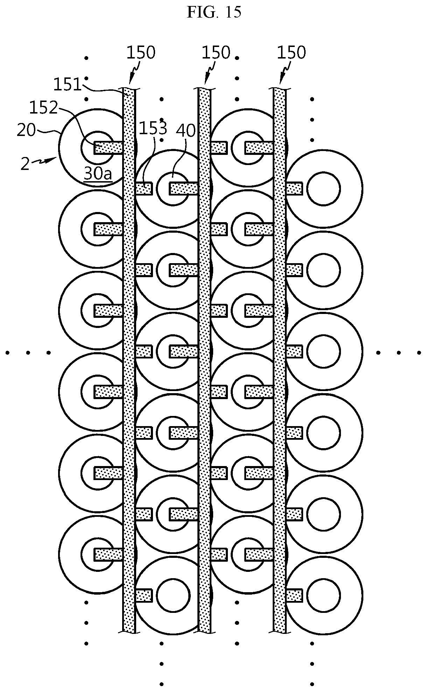

Referring to FIG. 15, in the case where the first electrode terminal and the second electrode terminal of the cylindrical secondary battery 2 are positioned in the same direction as described above, an example of a structure in which the plurality of cylindrical secondary batteries 2 are electrically connected is shown. The plurality of cylindrical secondary batteries 2 may be connected in series and in parallel at the upper portion of the cylindrical secondary batteries 2 using a bus bar 150. The number of cylindrical secondary batteries 2 may be increased or decreased in consideration of the capacity of the battery pack.

In each cylindrical secondary battery 2, for example, the terminal 40 may have positive polarity and the outer surface 30a of the closed portion of the battery can 30 may have negative polarity, or vice versa.

Preferably, the plurality of cylindrical secondary batteries 2 may be arranged in a plurality of columns and rows. Based on FIG. 15, columns are in a vertical direction, and rows are in a left and right direction. In addition, in order to maximize space efficiency, the cylindrical secondary batteries 2 may be arranged in a closest packing structure. The closest packing structure is obtained when an equilateral triangle is formed by connecting the centers of the upper surfaces of the terminals 40 exposed to the outside of the battery can 30 to each other. Preferably, the bus bar 150 may be disposed at the upper portion of the plurality of cylindrical secondary batteries 2, more preferably between adjacent columns. Alternatively, the bus bar 150 may be placed between adjacent rows.

Preferably, the bus bar 150 connects the cylindrical secondary batteries 2 arranged in the same column in parallel to each other and connects the cylindrical secondary batteries 2 arranged in two adjacent columns in series to each other.

Preferably, the bus bar 150 may include a body portion 151, a plurality of first bus bar terminals 152 and a plurality of second bus bar terminals 153 for serial and parallel connection.

The body portion 151 may extend between the terminals 40 of adjacent cylindrical secondary batteries 2, preferably between columns of the cylindrical secondary batteries 2. Alternatively, the body portion 151 may extend along a column of the cylindrical secondary batteries 2 and may be regularly bent like a zigzag shape.

The plurality of first bus bar terminals 152 may protrude from one side of the body portion 151 toward the terminal 40 of each cylindrical secondary battery 2 and may be electrically coupled to the terminal 40. The electrical coupling between the first bus bar terminal 152 and the terminal 40 may be achieved by laser welding, ultrasonic welding, or the like. Also, the plurality of second bus bar terminals 153 may be electrically coupled to the outer surface 20a of each cylindrical secondary battery 2 from the other side of the body portion 151. The electrical coupling between the second bus bar terminal 153 and the outer surface 20a may be achieved by laser welding, ultrasonic welding, or the like.

Preferably, the body portion 151, the plurality of first bus bar terminals 152 and the plurality of second bus bar terminals 153 may be formed as one conductive metal plate. The metal plate may be, for example, an aluminum plate or a copper plate, but the present disclosure is not limited thereto. In a modified example, the body portion 151, the plurality of first bus bar terminals 152 and the second bus bar terminal 153 may be prepared as separate pieces and then coupled to each other through welding or the like.

In the cylindrical secondary battery 2 according to the present disclosure, since the terminal 40 having positive polarity and the outer surface 20a of the closed portion of the battery can 30 having negative polarity are located in the same direction, the cylindrical secondary batteries 2 may be electrically connected easily using the bus bar 150.

In addition, since the terminal 40 of the cylindrical secondary battery 2 and the outer surface 20a of the closed portion of the battery can 30 have a large area, the coupling area of the bus bar 150 may be sufficiently secured, thereby sufficiently lowering the resistance of the battery pack including the cylindrical secondary battery 2.

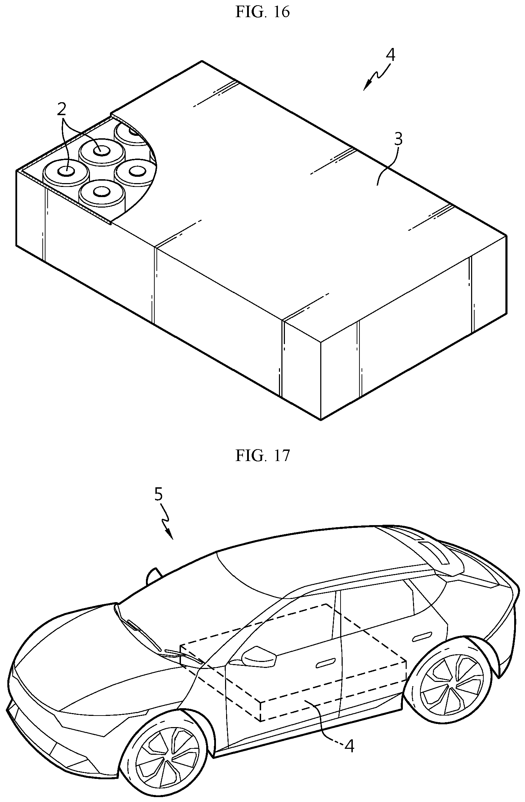

Referring to FIG. 16, a battery pack 4 according to an embodiment of the present disclosure includes a secondary battery assembly including a plurality of cylindrical secondary batteries 2 electrically connected according to an embodiment of the present disclosure as described above and a pack housing 3 to accommodate the secondary battery assembly. In FIG. 16, some components such as a busbar for electrical connection and a power terminal are omitted for convenience of illustration. A specific example of the electrical connection structure of the plurality of cylindrical secondary batteries 2 is as described above with reference to FIG. 15.

Referring to FIG. 17, a vehicle 5 according to an embodiment of the present disclosure may be, for example, an electric vehicle, and includes the battery pack 4 according to an embodiment of the present disclosure. The vehicle 5 works by the power supplied from the battery pack 4 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A sub cell, comprising:
a j elly-roll type electrode assembly including an electrode tab;
a current collector plate joined to one side of the electrode assembly and electrically connected to the electrode tab; and
a solder interposed between the electrode tab and the current collector plate to join the electrode tab and the current collector plate, the solder having a lower melting point than the electrode tab and the current collector plate.

2. The sub cell according to claim 1, wherein the solder penetrates in between adjacent electrode tabs by capillary action when the solder melts by the welding.

3. The sub cell according to claim 2, wherein a penetration distance of the solder is shorter than an extension length of the electrode tab.

4. The sub cell according to claim 1, wherein an end of the electrode tab in a lengthwise direction is bent in a direction parallel to the current collector plate, and
the solder is interposed between a plane formed by the bend of the electrode tab and the current collector plate.

5. The sub cell according to claim 3, wherein the penetration distance of the solder between adjacent electrode tabs gradually decreases as it goes from an outer peripheral surface of the electrode assembly to a winding center.

6. The sub cell according to claim 1, wherein the current collector plate includes a plurality of sub plates which extend radially from a center and are spaced apart from each other.

7. The sub cell according to claim 6, wherein the sub plate gradually decreases in width as it goes from an outer peripheral surface of the electrode assembly to a winding center.

8. The sub cell according to claim 7, wherein the solder gradually decreases in width as it goes from the outer peripheral surface of the electrode assembly to the winding center.

9. The sub cell according to claim 1, wherein the electrode assembly has a structure in which a first electrode, a second electrode, and a separator interposed therebetween are wound in one direction, and
the first electrode and the second electrode include a first non-coated region and a second non-coated region, respectively, which are provided at a long side end thereof, are not coated with an active material and are exposed to the outside of the separator.

10. The sub cell according to claim 9, wherein at least one of the first non-coated region and the second non-coated region functions as the electrode tab.

11. The sub cell according to claim 9, wherein the non-coated region of at least one of the first non-coated region and the second non-coated region includes a plurality of segments divided along a winding direction of the electrode assembly, and
the plurality of segments are bent along a radial direction of the electrode assembly.

12. The sub cell according to claim 11, wherein the plurality of bent segments are overlapped in multiple layers along the radial direction.

13. The sub cell according to claim 12, wherein the electrode assembly has a welding target area in which the number of overlaps of the segments provided in the non-coated region is maintained constant along the radial direction of the electrode assembly.

14. The sub cell according to claim 13, wherein the current collector plate is joined to the non-coated region inside the welding target area.

15. A cylindrical secondary battery, comprising:
the sub cell according to any one of claims 1 to 14; and
a battery can configured to accommodate the sub cell through an open portion provided at one side thereof and electrically connected to the electrode assembly.

16. The cylindrical secondary battery according to claim 15, further comprising a terminal electrically connected to the electrode assembly, having a polarity opposite to the battery can and insulated from the battery can.

17. The cylindrical secondary battery according to claim 16, wherein the terminal is exposed to the outside through a closed portion provided at a side opposite to the open portion of the battery can.

18. The cylindrical secondary battery according to claim 15, further comprising a cap plate configured to seal the open portion.

19. The cylindrical secondary battery according to claim 18, wherein the cap plate has no polarity.

20. A battery pack, comprising:
a plurality of cylindrical secondary batteries according to claim 15; and
a pack housing configured to accommodate the plurality of cylindrical secondary batteries.

21. The battery pack according to claim 20, wherein each of the plurality of cylindrical secondary batteries includes a terminal that is electrically connected to the electrode assembly, has a polarity opposite to the battery can and is insulated from the battery can.

22. The battery pack according to claim 21, wherein an outer surface of a closed portion of the battery can of each of the plurality of cylindrical secondary batteries and the terminal of the battery can are disposed to face the same direction.

23. The battery pack according to claim 22, further comprising a plurality of bus bars configured to connect the plurality of cylindrical secondary batteries in series and in parallel.

24. The battery pack according to claim 23, wherein the plurality of bus bars are disposed at an upper portion of the plurality of cylindrical secondary batteries, and
each of the bus bars includes:
a body portion configured to extend between terminals of adjacent cylindrical secondary batteries;
a plurality of first bus bar terminals configured to extend in one side direction of the body portion and electrically coupled to a terminal of a cylindrical secondary battery located in the one side direction; and
a plurality of second bus bar terminals configured to extend in the other side direction of the body portion and electrically coupled to an outer surface of the closed portion of a cylindrical secondary battery located in the other side direction.

25. A vehicle, comprising the battery pack according to claim 20.

26. A method for manufacturing a sub cell, comprising:
(S 1) preparing a jelly-roll type electrode assembly;
(S2) preparing a current collector plate having a solder on one surface;
(S3) seating the current collector plate on the electrode assembly; and
(S4) performing welding to join an electrode tab of the electrode assembly and the current collector plate together by melting of the solder, wherein the welding is performed at a lower temperature than a melting point of the electrode tab and a melting point of the current collector plate.

27. The method for manufacturing a sub cell according to claim 26, wherein the step (S4) comprises melting the solder to cause the solder to penetrate in between adjacent electrode tabs by capillary action.

28. The method for manufacturing a sub cell according to claim 27, wherein the step (S2) comprises adjusting a thickness of the solder formed on one surface of the current collector plate so that a penetration distance of the solder is shorter than an extension length of the electrode tab.

29. The method for manufacturing a sub cell according to claim 28, wherein the step (S2) comprises adjusting the thickness of the solder formed on one surface of the current collector plate so that the penetration distance of the solder between adjacent electrode tabs gradually decreases as it goes from an outer peripheral surface of the electrode assembly to a winding center.
